# EUROPÄISCHE PATENTSCHRIFT

(11) **EP 3 090 616 B1**
(45) Veröffentlichungstag und Bekanntmachung des Hinweises auf die Patenterteilung: **14.03.2018**
(21) Anmeldenummer: 16155143.7
(22) Anmeldetag: 11.02.2016
(51) Int. Cl.: A01D 41/16

(54) **SCHNITTWINKELVERSTELLUNG EINES SCHNEIDWERKS**
CUT ANGLE ADJUSTMENT OF A CUTTING SYSTEM
REGLAGE D'ANGLE DE COUPE D'UNE BARRE DE COUPE

(30) Priorität: 06.05.2015 DE 102015107090
(43) Veröffentlichungstag der Anmeldung: 09.11.2016
(73) Patentinhaber: CLAAS Selbstfahrende Erntemaschinen GmbH, 33428 Harsewinkel (DE)
(72) Erfinder: Kortenjann, Ludger, 48231 Warendorf (DE); Burbank, Martin, 48231 Warendorf (DE); Brand, Andreas, 33428 Marienfeld (DE)

(56) Entgegenhaltungen:
- EP-A1- 0 448 844
- EP-A1- 1 040 750
- EP-A1- 2 764 765

## Beschreibung

Die Erfindung betrifft eine Schnittwinkelverstellung eines Schneidwerks einer selbstfahrenden Erntemaschine mit einem über zumindest ein Schwenklager schwenkbar an einem Schrägförderergehäuse angeordneten Frontgehäuse, wobei das Frontgehäuse einen mit einem Mähwerk versehenen Schneidtisch aufnimmt und wobei ein Schwenkwinkel, den das Frontgehäuse zu dem Schrägförderergehäuse einnimmt, mittels einer Verstellvorrichtung, die zumindest ein einerseits am Frontgehäuse und anderseits am Schrägförderergehäuse angreifendes Stellelement aufweist, einstellbar ist.

Bei selbstfahrenden Erntemaschinen der genannten Gattung soll es sich vorzugsweise um selbstfahrende Mähdrescher handeln, in deren vorderem Bereich ein über zumindest einen Hubzylinder höheneinstellbares Schneidwerk angeordnet ist. Neben den im Rahmen der gattungsbildenden Merkmale genannten Bauelementen weist das Schneidwerk eine längs- sowie höhenverstellbare Haspel sowie einen als Förderschnecke ausgebildeten Querförderer auf. Dieser Querförderer fördert das zuvor über ein Mähwerk gemähte Erntegut in Richtung einer mittig angeordneten Einzugsöffnung, über welche dieses in einen Schrägförderer gelangt. Über diesen wird das Erntegut einem Dreschwerk des Mähdreschers zugeführt. Dabei ist das Mähwerk vorzugsweise als Mähbalken ausgeführt, der eine Vielzahl von an einem Schneidtisch in einer Reihe angeordneten Fingern aufweist, in denen zumindest ein Messerbalken geführt ist. Der Schrägförderer, der sich an die Einzugsöffnung anschließt, ist als in einem Schrägförderergehäuse angeordnetes Ketten- oder Riemenförderelement ausgebildet.

Für die zuvor angegebene Höheneinstellung des Schneidwerks ist das Schrägfördergehäuse an seinem dem Dreschwerk zugewandten Ende schwenkbar am Gestell der Erntemaschine geführt. An seinem anderen Ende ist das Schrägförderergehäuse über ein Frontgehäuse verlängert, wobei sich dieses Frontgehäuse zu Einstellzwecken wiederum gegenüber dem Schrägförderergehäuse in vertikaler Richtung verschwenken lässt. Dadurch kann die Lage des Schneidtisches korrigiert werden, so dass der zumindest eine Mähbalken möglichst parallel zum überfahrenen Boden geführt wird.

Ein Schneidwerk der im Oberbegriff des Patentanspruchs 1 genannten Gattung ist aus der EP 1 040 750 A1 bekannt. Dabei ist das Frontgehäuse, das mit vertikal verlaufenden Seitenwänden Seitenwände des Schrägförderergehäuses übergreift, schwenkbar am Schrägförderergehäuse geführt. An das Frontgehäuse ist das Schneidwerk ankuppelbar, wozu es über einen in seinem oberen Bereich vorgesehenen Querträger in eine dessen Form angepasste Aufnahme eingreift und im unteren Bereich durch eine Klinke verriegelt ist. Das Frontgehäuse und somit die Lage des Schneidwerks werden im Bereich von dessen Seitenwänden verstellt. Zu diesem Zweck greift einerseits jeweils eine mit einer Öse versehene Stellschraube an einem Querbolzen an der entsprechenden Seitenwand des Frontgehäuses an. Ein Gewindeabschnitt dieser Stellschraube verläuft andererseits durch eine Aufnahmeöffnung eines von der jeweiligen Seitenwand des Schrägförderergehäuses ausgehenden Winkels. Die Einstellarbeiten werden dadurch vorgenommen, dass die Lage zweier den jeweiligen Winkel einschließender Muttern auf dem Gewindeabschnitt verändert wird. Zuvor werden Klemmschrauben, die in kreisbogenartig zum Schwenklager des Frontgehäuses verlaufenden Langlöchern geführt sind, gelöst. Nach dem Einstellvorgang müssen die Klemmschrauben zur Fixierung der Seitenwände zueinander wieder angezogen werden.

Es ist Aufgabe der vorliegenden Erfindung, eine Schnittwinkelverstellung eines Schneidwerks einer selbstfahrenden Erntemaschine zu schaffen, mit der die Einstellarbeiten vereinfacht werden können.

Diese Aufgabe wird, ausgehend vom Oberbegriff des Patentanspruchs 1, in Verbindung mit dessen kennzeichnenden Merkmalen gelöst. Vorteilhafte Ausgestaltungen sind in den abhängigen Patentansprüchen wiedergegeben, die jeweils für sich genommen oder in verschiedenen Kombinationen miteinander einen Aspekt der Erfindung darstellen können.

Gemäß dem kennzeichnenden Teil des Patentanspruchs 1 soll das zumindest eine Stellelement als Spindeltrieb ausgebildet sein, der mit seinem ersten Ende in einer zwischen vertikalen Seitenwänden des Frontgehäuses verlaufenden oberen Quertraverse angeordnet ist und mit seinem zweiten Ende an einer oberen Querwand des Schrägförderergehäuses angreift.

Vorzugsweise kann ein Schraubmittel des Spindeltriebs zum Angriff eines Werkzeugs von der Stirnseite des Frontgehäuses her zugänglich sein. Dabei können zwei derartig ausgebildete und angeordnete Stellelemente vorgesehen sein. Vorzugsweise sind die stirnseitig vom Frontgehäuse her zugänglichen Schraubmittel als Außen- oder Innensechskant ausgebildet, so dass mittels eines Steckschlüssels mit Hilfe einer Ratsche oder eines elektrischen beziehungsweise pneumatischen Schraubers eine Verstellung vorgenommen werden kann.

Demgegenüber erfolgt die Schnittwinkelverstellung nach der EP 1 040 750 A1 in einem Bereich seitlich des Schrägförderergehäuses, der sich vor den Antriebsrädern der Erntemaschine befindet. Außerdem muss die Verstellung der beiden Muttern mittels zweier Maulschlüssel vorgenommen werden, so dass die Verletzungsgefahr beim Abrutschen des jeweiligen Maulschlüssels sehr groß ist.

In Weiterbildung der Erfindung soll der Spindeltrieb eine in ihrer Länge verstellbare Koppelstange aufweisen, die ein mit einem Innengewinde versehenes Rohr und ein mit einem Außengewinde versehenes Gestänge aufweist. Der Spindeltrieb weist somit die Form eines in der Landtechnik in anderen Anwendungen vorgesehenen längenveränderlichen Lenkers auf. Vorzugsweise hat die in das Rohr eingeschraubte Koppelstange an ihrem ersten durch die Quertraverse hindurchgeführten Ende einen Außen- oder Innensechskant, so dass die Koppelstange über eine Verdrehung weiter in das Rohr ein- oder aus diesem herausgeschraubt werden kann. Das Rohr greift in diesem Fall an der oberen Querwand des Schrägförderergehäuses an. Alternativ dazu besteht aber auch die Möglichkeit, das Rohr mit dem Sechskant zu versehen und an der Quertraverse des Frontgehäuses angreifen zu lassen und die Koppelstange mit der oberen Querwand des Schrägförderergehäuses zu verbinden.

Weiterhin wird vorgeschlagen, dass am Ende des Rohrs ein Gelenklager vorgesehen ist. Dadurch können eventuell auftretende Fluchtungsfehler ausgeglichen werden. Dabei kann die in der Quertraverse vorgesehene Aufnahme als Kugelkalotte ausgebildet sein, die einen Kugelkopf des Gestänges aufnimmt.

Von besonderem Vorteil ist eine Weiterbildung des erfindungsgemäßen Schnittwinkelverstellung, bei der die Verstellvorrichtung zwei Spindeltriebe aufweist, die jeweils in den beiden Endbereichen der Quertraverse vorgesehen sind, wobei zwischen den Spindeltrieben ein die Stellbewegung übertragendes Antriebsmittel vorgesehen ist. Dadurch wird erreicht, dass bei einer Schraubbewegung an einem Spindeltrieb und somit dem Einleiten einer Verstellbewegung an einer Seite des Frontgehäuses eine synchrone Verstellung an der anderen Seite des Frontgehäuses bewirkt wird. Dadurch wird verhindert, dass sich das Frontgehäuse während des an einem Spindeltrieb durchgeführten Verstellvorganges gegenüber dem Schrägförderergehäuse schräg stellt und verklemmt. Einen weiteren Vorteil stellt die Reduzierung des zeitlichen Aufwandes dar, um die Schnittwinkeleinstellung vornehmen zu können.

Dabei kann das Antriebsmittel als Zugmitteltrieb ausgebildet sein, das zwei jeweils drehfest auf dem Gestänge angeordnete Kettenritzel und eine an diesen im Eingriff befindliche Antriebskette aufweist. Über die Antriebskette wird somit die Drehbewegung des verstellten Spindeltriebs auf den anderen Spindeltrieb übertragen, so dass der Verstellvorgang synchron auf beiden Seiten des Frontgehäuses erfolgt.

Alternativ dazu kann das zwischen den beiden Spindeltrieben vorgesehene Antriebsmittel als Winkeltrieb ausgebildet sein. In diesem Fall sind auf beiden Gestängen Kegelritzel angeordnet, die mit entsprechenden Kegelritzeln einer Verbindungswelle kämmen.

Bevorzugt kann das zumindest eine Stellelement mit einem Hydraulik- oder Elektromotor trieblich verbunden sein. Auf diese Weise kann eine Fernbedienbarkeit aus der Kabine der Erntemaschine heraus ermöglicht werden.

Dabei kann der Schnittwinkel mittels einer Steuerungseinrichtung steuer- oder regelbar sein. Dies gestattet auch die Automatisierung der Schnittwinkelverstellung, beispielsweise in Abhängigkeit vom sensorisch detektierten Abstand des Mähbalkens zum Boden. Eine Änderung dieses Abstandes kann eine automatische Anpassung des Schnittwinkels nach sich ziehen, insbesondere während des laufenden Erntebetriebes.

Zur weiteren Erläuterung der Erfindung wird auf die Figuren verwiesen, in denen zwei Ausführungsbeispiele der Erfindung vereinfacht dargestellt sind. Es zeigen:
- Figur 1: eine Teilansicht eines an einem Schrägförderergehäuse angeordneten Frontgehäuses, wobei mittels dieser Anordnung ein Schnittwinkel eines Schneidwerks verstellbar ist,
- Figur 2: eine Seitenansicht des Schrägförderergehäuses mit dem daran schwenkbar geführten Frontgehäuse,
- Figur 3: einen Längsschnitt durch das Schrägförderergehäuse der Figur 2 im Bereich eines zwischen dem Frontgehäuse und dem Schrägförderergehäuse vorgesehenen Spindeltriebs,
- Figur 4: eine vergrößerte Teilansicht gemäß dem Ausschnitt IV in Figur 3,
- Figur 5: eine vergrößerte Teilansicht gemäß dem Ausschnitt V in Figur 2,
- Figur 6: eine Ansicht eines Frontgehäuses auf dessen Rückseite, das als erste Ausführungsform einer Schnittwinkelverstellung mit einem als Zugmitteltrieb ausgebildeten Antriebsmittel versehen ist,
- Figur 7: eine Ansicht eines Frontgehäuses auf dessen Rückseite, das als zweite Ausführungsform einer Schnittwinkelverstellung mit einem als Kegeltrieb ausgebildeten Antriebsmittel versehen ist, und
- Figur 8: als schematische Darstellung eine Teilansicht einer selbstfahrenden Erntemaschine im Bereich ihres über ein Frontgehäuse mit einem Schrägfördergehäuse verbundenen Schneidwerks.

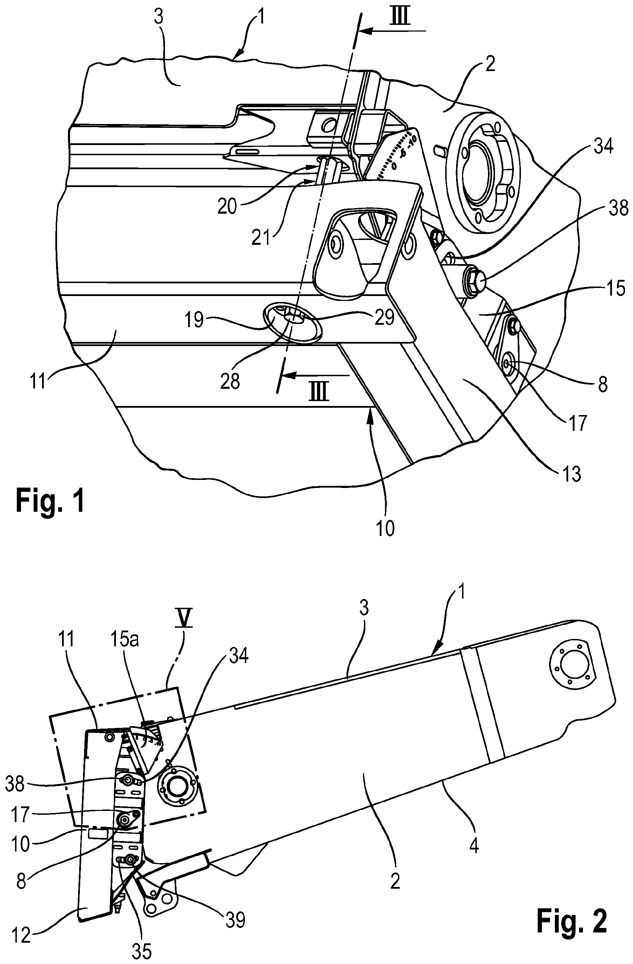

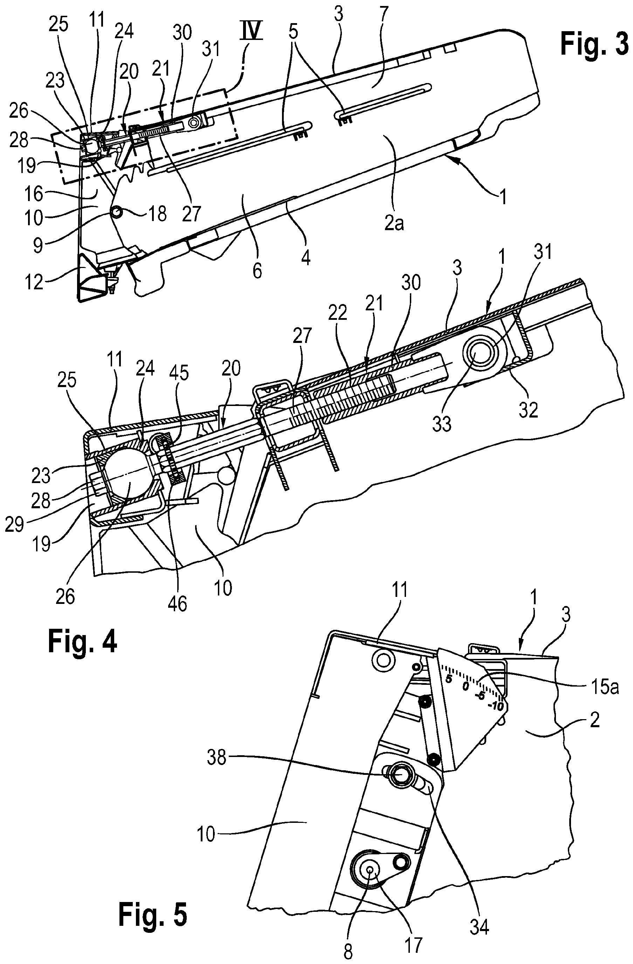

In den Figuren 1 bis 5 ist mit 1 ein Schrägförderergehäuse bezeichnet, das zur Erläuterung der erfindungsgemäßen Mittel in den Darstellungen nur als ein für die Aufnahme der Förder- und Antriebsmittel vorgesehenes Gehäuse aus Stahlblech gezeigt wird. Dabei besteht das Schrägförderergehäuse 1 aus zwei parallel verlaufenden Seitenwänden 2 und 2a sowie einer oberen Querwand 3 und einer unteren Querwand 4, die unter einem Winkel zueinander verlaufen, so dass sich das Schrägförderergehäuse 1 in Förderrichtung verengt. Das Innere des Schrägförderergehäuses 1 ist gemäß Figur 3 durch eine in dessen Längsrichtung verlaufende Trennwand 5 in einen unteren Förderschacht 6 und einen oberen Rücklaufschacht 7 unterteilt.

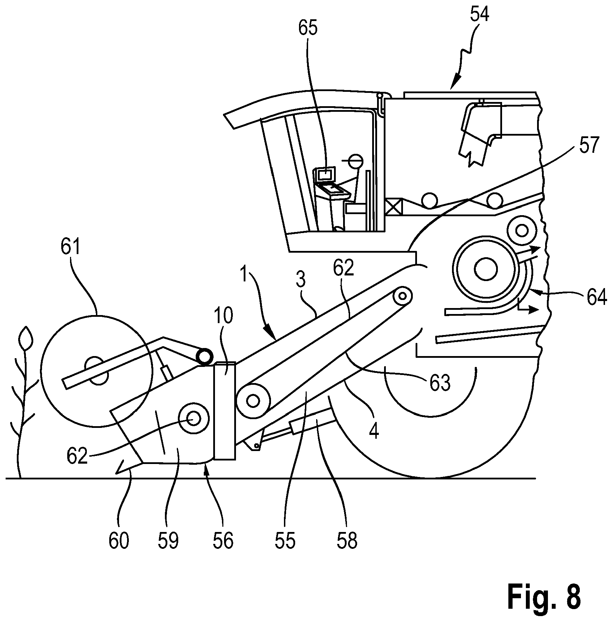

Da die Figuren 1, 2 und 5 jeweils eine Ansicht auf die, in Fahrtrichtung einer in Fig. 8 angedeuteten Erntemaschine 54 gesehen, linke Seite des Schrägförderergehäuses 1 zeigen, ist in diesen ein erstes an der Seitenwand 2 angeordnetes Schwenklager 8 sichtbar, zu dem, wie aus der Figur 3 hervorgeht, gleichachsig verlaufend, ein zweites Schwenklager 9 in der Seitenwand 2a vorgesehen ist. Ein Frontgehäuse 10 übergreift partiell den Außenmantel des Schrägfördergehäuses 1 in dessen Eintrittsbereich.

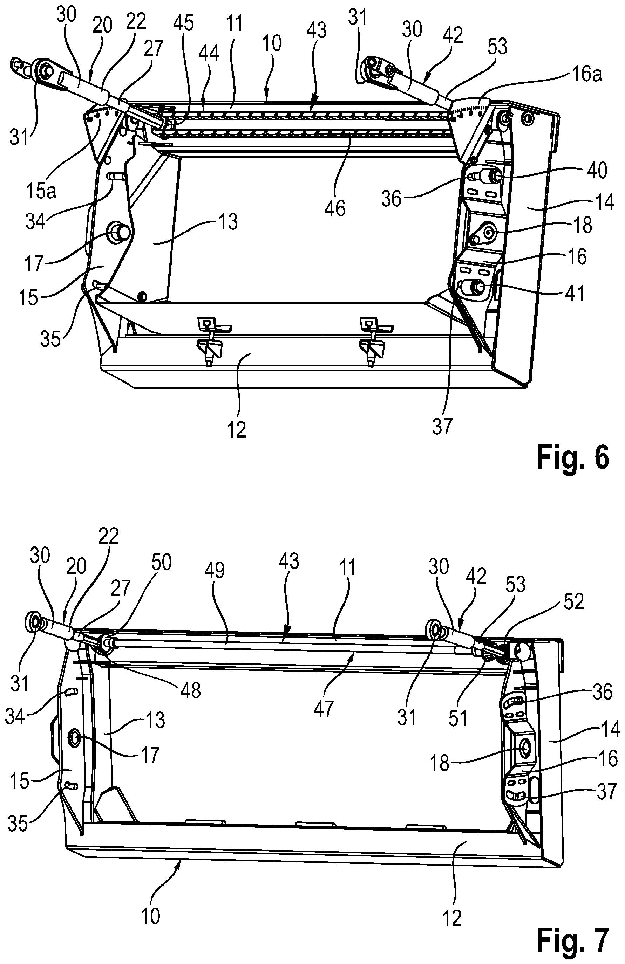

Das Frontgehäuse 10 weist eine obere Quertraverse 11 und eine parallel zu dieser verlaufende untere Quertraverse 12 auf, die, wie insbesondere die Figuren 6 und 7 zeigen, über vertikal verlaufende Traversen 13 und 14 miteinander verbunden sind. Von jeder der Traversen 13 und 14 geht eine Konsole 15 und 16 aus, an der jeweils ein Schwenkzapfen 17 und 18 befestigt ist. Diese beiden Schwenkzapfen 17 und 18 greifen in die entsprechenden, ihnen zugewandte Schwenklager 8 und 9 ein, wenn das Frontgehäuse 10 an das Schrägförderergehäuse 1 montiert ist, so dass das Frontgehäuse 10 gegenüber dem Schrägförderergehäuse 1 um eine quer verlaufende Achse drehbar ist. An den Konsolen 15 und 16 befinden sich Skalen 15a und 16a, an denen man die Stellung des Frontgehäuses 10 gegenüber dem Schrägförderergehäuse 1 ablesen kann.

Wie insbesondere aus den Figuren 1, 3 und 4 hervorgeht, ist in der oberen Quertraverse 11, mit Abstand zu deren Ende, eine zylindrische Aufnahme 19 vorgesehen, die in Richtung des Schrägfördergehäuses 1 verläuft. Diese Aufnahme 19 nimmt ein Stellelement 20 auf, das als Spindeltrieb 21 ausgebildet ist. Der Spindeltrieb 21 weist eine längenveränderliche Koppelstange 22 auf. Der Spindeltrieb 21 greift einerseits an der oberen Quertraverse 11 sowie andererseits an der oberen Querwand 3 des Schrägförderergehäuses 1 an. Zu diesem Zweck ist in die Aufnahme 19 eine aus zwei Halbschalen 23 und 24 bestehende Kugelkalotte 25 in die zylindrische Aufnahme 19 eingesetzt, wobei die Kugelkalotte 25 einen Kugelkopf 26 eines mit einem Außengewinde versehenen Gestänges 27 aufnimmt.

An einem nach außen über die Kugelkalotte 25 vorstehenden Ende des Gestänges 27 befindet sich ein Schraubmittel 28, das als mit einem Außensechskant versehener Schraubenkopf 29 ausgebildet ist. Das Außengewinde des Gestänges 27 greift in ein Innengewinde eines Rohres 30 ein, welches an seinem vom Gestänge 27 abgewandten Ende ein Gelenklager 31 aufweist. An der oberen Querwand 3 des Schrägförderergehäuses 1 ist eine Aufnahmetasche 32 angeordnet, in der das Gelenklager 31 über einen Bolzen 33 fixiert ist. Folglich wird eine Winkellage des Frontgehäuses 10 zum Schrägförderergehäuse 1 durch eine Veränderung des Abstandes zwischen der Kugelkalotte 25 und dem Bolzen 33 eingestellt, wobei das Frontgehäuse 10 um die beiden Schwenklager 8 und 9 verschwenkt wird.

Die Figuren 2, 5, 6 und 7 zeigen, dass die Konsolen 15 und 16 radial zu den Schwenklagern 8 und 9 verlaufende Langlöcher 34, 35, 36 und 37 aufweisen. Über Feststellschrauben 38, 39, 40 und 41, die durch diese hindurchgeführt sind, wird das Frontgehäuse nach dem Einstellvorgang mit dem Schrägförderergehäuse 1 an dessen Seitenwänden verschraubt. Wegen der Breite des Frontgehäuses 10 und des Schrägförderergehäuses 1 ist es zweckmäßig, den Verstellvorgang mittels zweier in den Figuren 6 und 7 dargestellter Spindeltriebe 21 und 42, die symmetrisch zur Längsebene des Frontgehäuses 10, in der Nähe der Enden der oberen Quertraverse 11, angeordnet sind, vorzunehmen. Anderenfalls können örtliche Spannungen am Frontgehäuse 10 auftreten, so dass es sich gegenüber dem Schrägförderergehäuse 1 verklemmt.

Optimal ist in diesem Zusammenhang eine synchrone Verstellung beider Spindeltriebe 21 und 42. Diese wird dadurch erreicht, dass zwischen den Spindeltrieben 21 und 42 ein Antriebsmittel 43 vorgesehen ist, das die Stellbewegung oder Schraubbewegung von einem Spindeltrieb 21 auf den anderen Spindeltrieb 42 überträgt. Gemäß der Figur 6 ist das Antriebsmittel 43 als Zugmitteltrieb 44 ausgebildet, wobei auf dem Gestänge 27 des ersten Spindeltriebs 21 ein zum Antrieb dienendes Kettenritzel 45 angeordnet ist, das während des am Spindeltrieb 21 durchgeführten Verstellvorganges eine Antriebskette 46 antreibt. Der in Figur 6 gezeigte Spindeltrieb 42, der im Wesentlichen baugleich mit dem Spindeltrieb 21 sein kann, weist ein nicht näher dargestelltes zum Abtrieb dienendes Kettenritzel auf, das auf einem Gestänge 53 des Spindeltriebs 42 angeordnet ist. Eine Verstellung am Spindeltrieb 21 über den Schraubenkopf 29 führt dazu, dass die Verdrehung des Gestänges 27 über die Antriebskette 46 auf das Gestänge des zweiten Spindeltriebes 42 übertragen wird, so dass beide Spindeltriebe 21 und 42 synchron verstellt werden.

Alternativ dazu besteht, wie in der Figur 7 gezeigt, die Möglichkeit, das Antriebsmittel 43 als Winkeltrieb 47 auszuführen. In diesem Fall ist auf dem Gestänge 27 des ersten Spindeltriebs 21 ein Kegelritzel 48 angeordnet, das sich einem auf einer Kegelritzelwelle 49 vorgesehenes Kegelritzel 50 im Eingriff befindet. Am anderen dem zweiten Spindeltrieb 42 zugewandten Ende der Kegelritzelwelle 49 befindet sich ein Kegelritzel 51, das mit einem Kegelritzel 52 des Spindeltriebs 42 kämmt. Dieses Kegelritzel 52 ist drehfest auf dem in dieser Darstellung sichtbaren Gestänge 53 angeordnet.

Schließlich zeigt die Figur 8 einen frontseitigen Bereich einer selbstfahrenden Erntemaschine 54 mit einem Schrägförderer 55, welcher in seinem Eintrittsbereich über das zuvor erläuterte Frontgehäuse 10 ein Schneidwerk 56 aufnimmt. Dabei ist der Schrägförderer 55 schwenkbar an einem Gestell 57 der Erntemaschine 54 angelenkt, so dass das Schneidwerk 56 über einen Hubzylinder 58 heb- und senkbar ist. Das Schneidwerk 56 weist einen Schneidtisch 59 auf, der in Ernterichtung einen Mähbalken 60 aufnimmt.

Weiterhin sind am Schneidwerk 56 eine Haspel 61, ein Querförderer 62 sowie an dessen äußeren Begrenzungen nicht näher dargestellte Halmteiler vorgesehen. Mittig zum gesamten Schneidwerk 56 und zum Querförderer 62 liegt eine in der Darstellung ebenfalls nicht sichtbare Durchtrittsöffnung eines Einzugskanals, über welche das Erntegut einem Kettenförderelement 63 des Schrägförderers 55 zugeführt wird. Dieses transportiert das Erntegut in ein Dreschwerk 64, das zumindest eine Dreschtrommel und einen Abscheidekorb aufweist. Das Schneidwerk 56 ist vorzugsweise an das Frontgehäuse 10 ankuppelbar, so dass es für eine Straßenfahrt der Erntemaschine 54 von diesem abgekuppelt werden kann. Die Erntemaschine umfasst eine Steuerungseinrichtung 65, welche der Steuerung und/oder Regelung der Arbeitsaggregate der Erntemaschine 54 dient. Mittels der Steuerungseinrichtung 65 können ein oder mehrere Antriebsmotoren, die trieblich mit dem als zumindest ein Spindeltrieb 21, 42 ausgebildeten Stellelement 20 verbunden sind, gesteuert beziehungsweise geregelt werden. Dies erlaubt die Verstellung des Schnittwinkels durch eine Bedienperson aus der Kabine der Erntemaschine heraus. Darüber hinaus ist eine Automatisierung der Schnittwinkelverstellung denkbar, bei welcher beispielsweise in Abhängigkeit von dem jeweiligen Abstand des Mähbalkens 60 zum Boden der Schnittwinkel automatisch angepasst wird.

Eine manuelle Schnittwinkelverstellung kann mit den erfindungsgemäß ausgebildeten und zwischen dem Frontgehäuse 10 sowie dem Schrägförderergehäuse 1 angebrachten Spindeltrieben 21 und 42 von der Stirnseite des Frontgehäuses 10 her durchgeführt werden. Dafür steht der diese Arbeit ausführenden Person ein ausreichender Platz zur Verfügung. Sie kann mittels eines Steckschlüssels, der an dem Schraubenkopf 29 angreift, mittels einer Ratsche oder eines elektrischen bzw. pneumatischen Schraubers den Spindeltrieb 21 verstellen. Über das Antriebsmittel 43 wird diese Drehbewegung auf den zweiten Spindeltrieb 42 übertragen, so dass das Frontgehäuse 10 und somit das an dieses angekuppelte Schneidwerk 56 beidseitig gleichmäßig verstellt werden. Alternativ kann vorgesehen sein, dass der Spindeltrieb 21 und der zweite Spindeltrieb 42 jeweils unabhängig voneinander einstellbar sind. Dies kann durch eine manuelle Betätigung mittels des Steckschlüssels, der an dem Schraubenkopf 29 angreift, erfolgen. Ebenfalls denkbar ist, dass der Spindeltrieb 21 und der zweite Spindeltrieb 42 jeweils durch einen eigenen motorischen Antrieb verstellbar sind.

**Bezugszeichenliste**

| | | | |
|---|---|---|---|
| **1** | Schrägfördergehäuse | **32** | Aufnahmetasche |
| **2** | Seitenwand von 1 | **33** | Bolzen |
| **2a** | Seitenwand von 1 | **34** | Langloch |
| **3** | Obere Querwand von 1 | **35** | Langloch |
| **4** | Untere Querwand von 1 | **36** | Langloch |
| **5** | Trennwand | **37** | Langloch |
| **6** | Unterer Förderschacht | **38** | Feststellschraube |
| **7** | Oberer Förderschacht | **39** | Feststellschraube |
| **8** | Erstes Schwenklager | **40** | Feststellschraube |
| **9** | Zweites Schwenklager | **41** | Feststellschraube |
| **10** | Frontgehäuse | **42** | Zweiter Spindeltrieb |
| **11** | Obere Quertraverse von 10 | **43** | Antriebsmittel |
| **12** | Untere Quertraverse von 10 | **44** | Zugmitteltrieb |
| **13** | Vertikal verlaufende Traverse | **45** | Kettenritzel |
| **14** | Vertikal verlaufende Traverse | **46** | Antriebskette |
| **15** | Konsole | **47** | Winkeltrieb |
| **15a** | Skala | **48** | Kegelritzel |
| **16** | Konsole | **49** | Kegelritzelwelle |
| **16a** | Skala | **50** | Kegelritzel |
| **17** | Schwenkzapfen | **51** | Kegelritzel |
| **18** | Schwenkzapfen | **52** | Kegelritzel |
| **19** | Aufnahme in 11 | **53** | Gestänge von 42 |
| **20** | Stellelement | **54** | Erntemaschine |
| **21** | Spindeltrieb | **55** | Schrägförderer |
| **22** | Koppelstange | **56** | Schneidwerk |
| **23** | Halbschale | **57** | Gestell von 54 |
| **24** | Halbschale | **58** | Hubzylinder |
| **25** | Kugelkalotte | **59** | Schneidtisch |
| **26** | Kugelkopf | **60** | Mähbalken |
| **27** | Gestänge von 21 | **61** | Haspel |
| **28** | Schraubmittel von 21 | **62** | Querförderer |
| **29** | Schraubenkopf von 21 | **63** | Kettenförderelement |
| **30** | Rohr von 21 | **64** | Dreschwerk |
| **31** | Gelenklager von 21 | **65** | Steuerungseinrichtung |

## Patentansprüche

1. Schnittwinkelverstellung eines Schneidwerks (56) einer selbstfahrenden Erntemaschine (54) mit einem über zumindest ein Schwenklager (8, 9) schwenkbar an einem Schrägförderergehäuse (1) angeordneten Frontgehäuse (10), wobei das Frontgehäuse (10) einen mit einem Mähwerk (60) versehenen Schneidtisch (59) aufnimmt und wobei ein Schwenkwinkel, den das Frontgehäuse (10) zu dem Schrägförderergehäuse (1) einnimmt, mittels einer Verstellvorrichtung, die zumindest ein einerseits am Frontgehäuse (10) und anderseits am Schrägförderergehäuse (1) angreifendes Stellelement (20) aufweist, einstellbar ist, **dadurch gekennzeichnet, dass** das zumindest eine Stellelement (20) als Spindeltrieb (21, 42) ausgebildet ist, der mit seinem ersten Ende in einer zwischen vertikalen Traversen (13 und 14) des Frontgehäuses (10) verlaufenden oberen Quertraverse (11) angeordnet ist und mit seinem zweiten Ende an einer oberen Querwand (3) des Schrägförderergehäuses (1) angreift.

2. Schnittwinkelverstellung nach Patentanspruch 1, **dadurch gekennzeichnet, dass** ein Schraubmittel (28) des Spindeltriebs (21) zum Angriff eines Werkzeugs von der Stirnseite des Frontgehäuses (10) her zugänglich ist.

3. Schnittwinkelverstellung nach einem der Patentansprüche 1 oder 2, **dadurch gekennzeichnet, dass** der Spindeltrieb (21, 42) eine in ihrer Länge verstellbare Koppelstange (22) aufweist, die ein mit einem Innengewinde versehenes Rohr (30) und ein mit einem Außengewinde versehenes Gestänge (27, 53) aufweist.

4. Schnittwinkelverstellung nach Patentanspruch 3, **dadurch gekennzeichnet, dass** das Gestänge (27) durch eine in der Quertraverse (11) vorgesehene Aufnahme (19) hindurchragt und dass das an diesem vorgesehene Schraubmittel (28) als Außen- (29) oder Innensechskant ausgebildet ist.

5. Schnittwinkelverstellung nach Patentanspruch 3, **dadurch gekennzeichnet, dass** am Ende des Rohrs (30) ein Gelenklager (31) vorgesehen ist.

6. Schnittwinkelverstellung nach Patentanspruch 3, **dadurch gekennzeichnet, dass** eine in der Quertraverse (11) vorgesehene Aufnahme (19) als Kugelkalotte (25) ausgebildet ist, die einen Kugelkopf (26) des Gestänges (27, 53) aufnimmt.

7. Schnittwinkelverstellung nach einem der Patentansprüche 1 oder 2, **dadurch gekennzeichnet, dass** die Verstellvorrichtung zwei Spindeltriebe (21 und 42) aufweist, die jeweils in den beiden Endbereichen der Quertraverse (11) vorgesehen sind, wobei zwischen den Spindeltrieben (21 und 42) ein die Stellbewegung übertragendes Antriebsmittel (43) vorgesehen ist.

8. Schnittwinkelverstellung nach Patentanspruch 7, **dadurch gekennzeichnet, dass** das Antriebsmittel (43) als Zugmitteltrieb (44) ausgebildet ist.

9. Schnittwinkelverstellung nach Patentanspruch 8, **dadurch gekennzeichnet, dass** der Zugmitteltrieb (44) zwei jeweils auf dem Gestänge (27 und 53) angeordnete Kettenritzel (45) und eine Antriebskette (46) aufweist.

10. Schnittwinkelverstellung nach Patentanspruch 7, **dadurch gekennzeichnet, dass** das Antriebsmittel (43) als Winkeltrieb ausgebildet ist.

11. Schnittwinkelverstellung nach einem der vorangehenden Patentansprüche, **dadurch gekennzeichnet, dass** das zumindest eine Stellelement (20) mit einem Hydraulik- oder Elektromotor trieblich verbunden ist.

12. Schnittwinkelverstellung nach Patentanspruch 11, **dadurch gekennzeichnet, dass** der Schnittwinkel mittels einer Steuerungseinrichtung (65) steuer- oder regelbar ist.

## Claims

1. A cutting angle adjustment of a cutting mechanism (56) of a self-propelled harvester (54) having a front housing (10) mounted pivotably to an inclined conveyor housing (1) by way of at least one pivot bearing (8, 9), wherein the front housing (10) accommodates a cutting table (59) provided with a mowing mechanism (60) and wherein a pivot angle that the front housing (10) assumes with respect to the inclined conveyor housing (1) is adjustable by means of an adjusting device which has at least one adjusting element (20) engaging on the one hand the front housing (10) and on the other hand the inclined conveyor housing (1), **characterised in that** the at least one adjusting element (20) is in the form of a spindle drive (21, 42) which is arranged with its first end in an upper transverse member (11) extending between vertical transverse portions (13 and 14) of the front housing (10) and with its second end engages an upper transverse wall (3) of the inclined conveyor housing (1).

2. A cutting angle adjustment according to claim 1 **characterised in that** a screw means (28) of the spindle drive (21) is accessible from the end of the front housing (10) for engagement of a tool.

3. A cutting angle adjustment according to one of claims 1 and 2 **characterised in that** the spindle drive (21, 42) has a coupling rod (22) which is adjustable in its length and which has a tube (30) provided with a female thread and a rod member (27, 53) provided with a male thread.

4. A cutting angle adjustment according to claim 3 **characterised in that** the rod member (27) projects through a receiving means (19) provided in the transverse member (11) and that the screw means (28) provided at same is in the form of an external (29) or internal hex.

5. A cutting angle adjustment according to claim 3 **characterised in that** a joint bearing (31) is provided at the end of the tube (30).

6. A cutting angle adjustment according to claim 3 **characterised in that** a receiving means (19) provided in the transverse member (11) is in the form of a spherical cup (25) which receives a spherical head (26) of the rod member (27, 53).

7. A cutting angle adjustment according to one of claims 1 and 2 **characterised in that** the adjusting device has two spindle drives (21 and 42) which are respectively provided in the two end regions of the transverse member (11), wherein provided between the spindle drives (21 and 42) is a drive means (43) for transmitting the adjusting movement.

8. A cutting angle adjustment according to claim 7 **characterised in that** the drive means (43) is in the form of a traction drive means (44).

9. A cutting angle adjustment according to claim 8 **characterised in that** the traction means drive (44) has two chain pinions (45) respectively arranged on the rod member (27 and 53) and a drive chain (46).

10. A cutting angle adjustment according to claim 7 **characterised in that** the drive means (43) is in the form of an angle drive.

11. A cutting angle adjustment according to one of the preceding claims **characterised in that** the at least one adjusting element (20) is drivingly connected to a hydraulic or electric motor.

12. A cutting angle adjustment according to claim 11 **characterised in that** the cutting angle can be controlled in open-loop or closed-loop mode by means of a control device (65).

## Revendications

1. Moyen de réglage d'angle de coupe d'un tablier de coupe (56) d'une machine de récolte automotrice (54), comprenant un carter avant (10) monté pivotant sur un carter de convoyeur incliné (1) par l'intermédiaire d'au moins un palier pivotant (8, 9), le carter avant (10) recevant une table de coupe (59) munie d'un mécanisme de coupe (60), et un angle de pivotement adopté par le carter avant (10) par rapport au carter de convoyeur incliné (1) étant réglable au moyen d'un dispositif de réglage, lequel comporte au moins un élément de réglage (20) agissant d'une part sur le carter avant (10) et d'autre part sur le carter de convoyeur incliné (1), **caractérisé en ce que** le au moins un élément de réglage (20) est conformé en mécanisme à broche filetée (21, 42) qui, avec sa première extrémité, est disposé dans une traverse transversale supérieure (11) s'étendant entre des traverses verticales (13 et 14) du carter avant (10) et, avec sa seconde extrémité, agit sur une paroi transversale supérieure (3) du carter de convoyeur incliné (1).

2. Moyen de réglage d'angle de coupe selon la revendication 1, **caractérisé en ce qu'**un moyen de vis (28) du mécanisme à broche filetée (21) est accessible pour être soumis à l'action d'un outil depuis la face frontale du carter avant (10).

3. Moyen de réglage d'angle de coupe selon une des revendications 1 ou 2, **caractérisé en ce que** le mécanisme à broche filetée (21, 42) comporte une tige de couplage (22) qui est réglable en longueur et qui comporte un tube (30), muni d'un filetage intérieur, et une tringle (27, 53), munie d'un filetage extérieur.

4. Moyen de réglage d'angle de coupe selon la revendication 3, **caractérisé en ce que** la tringle (27) traverse un logement (19) prévu dans la traverse transversale (11), et **en ce que** le moyen de vis (28) prévu sur celle-ci est conformé en hexagone mâle (29) ou femelle.

5. Moyen de réglage d'angle de coupe selon la revendication 3, **caractérisé en ce qu'**à l'extrémité du tube (30) est prévu un palier articulé (31).

6. Moyen de réglage d'angle de coupe selon la revendication 3, **caractérisé en ce qu'**un logement (19) prévu dans la traverse transversale (11) est conformé en calotte sphérique (25), laquelle reçoit une tête sphérique (26) de la tringle (27, 53) .

7. Moyen de réglage d'angle de coupe selon une des revendications 1 ou 2, **caractérisé en ce que** le dispositif de réglage comporte deux mécanismes à broche filetée (21 et 42) qui sont prévus respectivement dans les deux zones d'extrémité de la traverse transversale (11), entre les mécanismes à broche filetée (21 et 42) étant prévu un moyen d'entraînement (43) transmettant le mouvement de réglage.

8. Moyen de réglage d'angle de coupe selon la revendication 7, **caractérisé en ce que** le moyen d'entraînement (43) est conformé en mécanisme d'entraînement en traction (44).

9. Moyen de réglage d'angle de coupe selon la revendication 8, **caractérisé en ce que** le mécanisme d'entraînement en traction (44) comporte deux pignons à chaîne (45), disposés respectivement sur la tringle (27 et 53), et une chaîne d'entraînement (46).

10. Moyen de réglage d'angle de coupe selon la revendication 7, **caractérisé en ce que** le moyen d'entraînement (43) est conformé en couple conique.

11. Moyen de réglage d'angle de coupe selon une des revendications précédentes, **caractérisé en ce que** le au moins un élément de réglage (20) est relié de manière motrice à un moteur hydraulique ou électrique.

12. Moyen de réglage d'angle de coupe selon la revendication 11, **caractérisé en ce que** l'angle de coupe est commandable ou réglable au moyen d'un équipement de commande (65).
